Europäisches Patentamt

European Patent Office

Office européen des brevets

(11) Numéro de publication: **0 211 782 B1**

# FASCICULE DE BREVET EUROPEEN

(45) Date de publication de fascicule du brevet:
**02.10.91**

(51) Int. Cl.⁵: **B23B 1/00**

(21) Numéro de dépôt: **86420205.6**

(22) Date de dépôt: **24.07.86**

(54) **Procédé d'usinage de pièces tubulaires et dispositif pour la mise en oeuvre du procédé.**

(30) Priorité: **29.07.85 US 760165**

(43) Date de publication de la demande:
**25.02.87 Bulletin 87/09**

(45) Mention de la délivrance du brevet:
**02.10.91 Bulletin 91/40**

(84) Etats contractants désignés:
**DE FR GB SE**

(56) Documents cités:
**DE-A- 1 552 359
DE-A- 1 806 944
US-A- 3 817 149
US-A- 3 935 766
US-A- 4 305 689**

(73) Titulaire: **CEZUS Compagnie Européenne du Zirconium
Tour Manhattan - La Défense 2 6, Place de l'Iris
F-92400 Courbevoie(FR)**

(72) Inventeur: **Horn, Laurent
Allée de la Rongère
F-49460 Montreuil Juigne(FR)**
Inventeur: **Hautdidier, Jérôme
21, avenue du Commandant Mesnard
F-49240 Avrille(FR)**
Inventeur: **Soulet, Christian
Chemin des Lilas Les Charmettes
F-73400 Ugine(FR)**

(74) Mandataire: **Séraphin, Léon et al
PECHINEY 28, rue de Bonnel
F-69433 Lyon Cedex 03(FR)**

## Description

Selon les préambules des revendications 1 et 11 le domaine de l'invention est celui de l'usinage de pièces tubulaires. Par le document DE-A-1 806 944 représentant l'ètat de la technique le plus proche pour l'objet de la revendication 1, on connaît un procédé d'usinage d'un tube dont l'alésage est décentré par rapport à sa surface extérieure. Selon ce procédé, on effectue des mesures d'épaisseur du tube au moyen de plusieurs jeux de palpeurs extérieurs et intérieurs, et simultanément on fait tourner un outil d'usinage autour du tube en le déplaçant radialement en fonction desdites mesures d'épaisseur et d'une épaisseur de paroi minimale choisie. Le tube se déplace par rapport au dispositif de mesure et par rapport à l'outil tournant dont l'appui sur le tube dépend desdites mesures d'épaisseur. On obtient ainsi des tubes usinés concentriques et d'épaisseur régulière.

Mais dans ce procédé, le maintien des palpeurs intérieurs serait difficile ou impossible dans des tubes longs et de faible diamètre intérieur, par exemple des tubes extrudés et laminés de longueur allant jusqu'à 8 mètres et de diamètre intérieur typique 15 à 75 mm.

On a également proposé selon l'art antérieur de faire tourner le tube devant une cellule à ultrasons qui détermine l'épaisseur du tube en chaque point d'une section transversale et devant un outil dont le déplacement radial est asservi à chaque instant à l'information d'épaisseur issue de la cellule à ultrasons. L'ensemble cellule-outil se déplace en même temps parallèlement au tube de façon que celui-ci soit exploré et usiné sur toute sa surface selon une trajectoire hélicoïdale. La rotation du tube se fait autour de l'axe défini par les centres de ses sections d'extrémité ou autour de l'axe de surface extérieure. Ce procédé permet de donner au tube une épaisseur constante sur toute sa longueur, parfois même une excentration théoriquement nulle, mais au prix d'un système d'asservissement permanent de l'outil très complexe et d'un enlèvement de matière très important.

Par ailleurs, on connaît par le brevet US-A-4 305 689 (= FR 2 438 517) un dispositif d'usinage de manetons de vilebrequins qui comporte un banc portant deux mandrins coaxiaux orientables, deux guides d'outil portés par ce banc sur lequel ils peuvent se déplacer parallèlement à l'axe des mandrins, deux porte-outils portés par chacun de ces guides d'outil sur lesquels ils peuvent se déplacer perpendiculairement à l'axe des mandrins, et des fraises annulaires à dents intérieures portées par lesdits porte-outils, entourant le produit à usiner et tournant autour d'un axe parallèle à l'axe des mandrins. Ce dispositif ne permet pas faire des usinages de profondeur variant sur le pourtour d'un produit, en particulier d'un tube excentré pour lui donner une épaisseur constante.

La demanderesse a cherché à obtenir un procédé et un dispositif d'usinage bien adaptés à des tubes longs et de faible diamètre intérieur, et permettant un enlèvement de matière faible. Elle s'est intéressée aux tubes dont les sections transversales ont des contours intérieurs et extérieurs circulaires, tels que des tubes sans soudure, obtenus par exemple par filage sur mandrin d'un lopin percé puis éventuellement par un certain nombre de passes de laminage. En pratique, comme dans DE-A-1 806 944, le trou intérieur d'un tel tube n'est pas parfaitement coaxial à sa surface extérieure, et de plus les zones d'épaisseur minimale des sections successives du tube ont des positions dont l'orientation varie le long du tube.

## EXPOSEDE L'INVENTION

Le procédé de l'invention a pour but d'obtenir une excentration nulle sur toute la longueur du tube, à la tolérance désirée près, et une épaisseur de paroi constante dans chaque section.

L'invention a pour objet un procédé d'usinage d'un tube dont les sections droites ont des contours intérieur et extérieur circulaires, dans lequel comme connu par le DE-A-1 806 944, on effectue des mesures d'épaisseur du tube et dans lequel on fait tourner un outil d'usinage et on le déplace radialement en tenant compte desdites mesures d'épaisseur, jusqu'à obtenir une épaisseur de paroi choisie. Selon l'invention, ce procédé comprend les stades suivants :

a) On détermine pour une section droite dudit tube d'une part la position des extrémités du diamètre de référence allant du point où l'épaisseur de paroi est minimale au point où l'épaisseur de paroi est maximale, d'autre part les valeurs de ces deux épaisseurs.

b) On détermine la position du centre du contour extérieur comme milieu du diamètre de référence.

c) On détermine la position du centre du contour intérieur comme distant du centre du contour extérieur d'une longueur égale à la demi-différence desdites épaisseurs maximale et minimale en direction du point d'épaisseur minimale.

d) Le tube étant fixe, on fait tourner ledit outil d'usinage autour d'un axe passant par le centre du contour intérieur de la dite section droite.

e) On effectue ledit déplacement radial dudit outil en direction dudit axe de rotation, l'épaisseur de paroi constante dudit tube obtenue étant au plus égale à ladite épaisseur minimale initiale de ladite section droite.

f) On éloigne l'outil, on déplace le porte-outils en face de la section suivante et on répète les opérations précédentes sur les sections successives désirées du tube.

La section usinée à la suite du réglage effectué à partir de chaque section droite est ainsi une section mince du tube contenant la section droite considérée et de longueur de tube habituellement égale à la largeur de coupe d'une pastille en carbure de tungstène, largeur éventuellement variable avec la profondeur de coupe et typiquement comprise entre 2 et 12 mm. Les sections droites de réglage et les sections usinées successives sont décalées entre elles d'une distance égale à la longueur précédente moins une distance de recouvrement au plus égale à 2 mm.

Si l'on considère que l'on est en présence d'un système à 3 éléments à savoir le tube, l'outil et l'axe matérialisé de rotation de l'outil, le réglage de l'invention consiste à mettre en rotation l'outil autour de l'axe, sans contact avec le tube, puis à déplacer transversalement l'axe par translation de l'ensemble (axe-outil) par rapport au tube fixe, enfin à déplacer l'outil jusqu'à sa position d'usinage par translation radiale de l'outil seul par rapport à l'ensemble (axe-tube). Par axe matérialisé de rotation de l'outil, on entend en pratique l'axe de rotation du dispositif entraînant l'outil autour du tube. On préfère démarrer la rotation de l'outil avant son positionnement radial pour obtenir une attaque d'usinage moins brutale.

Parmi les variantes possibles, la demanderesse préfère orienter initialement le tube par rotation limitée d'un certain angle autour de son axe longitudinal, de façon que le diamètre de référence de la section considérée soit placé dans une position déterminée par rapport au système permettant la translation transversale de l'ensemble (axe-outil). Ensuite, le tube gardera cette position pendant l'usinage de la section.

Le procédé commence par un stade de repérage et de mesure sur un appareil distinct du banc d'usinage. Parmi les différents moyens d'inspection non destructifs, on préfère employer un dispositif à ultra-sons à plusieurs traducteurs qui permettent de déterminer en continu la position et l'épaisseur du tube et donc d'en déduire les épaisseurs minimale et maximale ainsi que la position des cercles intérieur et extérieur des sections successives. On détermine ainsi, pour toute section droite d'abscisse X (mesurée depuis une section origine, par exemple depuis une extrémité du tube), la direction et le sens du diamètre de référence orienté de la section, allant du point d'épaisseur maximale E au point d'épaisseur minimale e et on la repère par l'angle qu'il fait avec le diamètre de référence orienté de la section origine. On détermine aussi les valeurs des épaisseurs e et E.

Tous ces renseignements constituent les caractéristiques de la section considérée.

On transfère ensuite le tube au banc d'usinage, sans modifier son orientation, par exemple au moyen d'une translation transversale. Une fois le tube sur le banc d'usinage, on modifie son orientation de façon que le diamètre de référence de la première section à usiner soit parallèle à la direction de translation transversale de l'ensemble (axe-outil). L'outil, en position de retrait radial maximal, est alors entraîné en rotation autour de son axe, sans contact avec le tube fixe.

On procède ensuite au réglage du banc d'usinage en déplaçant l'axe ce rotation de l'outil , perpendiculaire au plan de la section considérée, jusqu'à ce qu'il passe par le centre du contour intérieur, qui est lui-même déterminé par rapport au centre du contour extérieur, milieu du segment joignant deux palpeurs venant au contact des extrémités du diamètre de référence de la section. Dans le cas d'une machine d'usinage à commande numérique, toutes les caractéristiques de la section obtenues par l'appareil à ultrasons sont introduites dans la mémoire de la machine, et traitées par un programme permettant d'abord d'orienter le tube puis de positionner l'axe de rotation.

Enfin, on déplace progressivement l'outil en direction radiale pour amener son arête au niveau du point d'épaisseur minimale de la section considérée du tube, cette arête décrivant alors un cercle ayant pour centre le centre du contour intérieur de la section et pour rayon le rayon du contour intérieur augmenté de la valeur de l'épaisseur minimale. Le contour extérieur ainsi usiné est concentrique au contour intérieur et l'épaisseur de la paroi est constante dans la section.

On passe à la section suivante en déplaçant longitudinalement le porteoutils le long du tube et en orientant le tube de façon à positionner le diamètre de référence de cette nouvelle section.

Ce procédé permet une simplification du système de commande de l'outil puisque celui-ci est asservi à une seule condition de position radiale pour une section donnée. D'autre part, l'enlèvement de matière correspondant à la correction d'excentration peut être réduit au minimum dans chaque section usinée, donc pour l'ensemble du tube. Il est particulièrement intéressant pour les tubes épais qui subissent ensuite un étirage ou un laminage, car celui-ci contribue à minimiser les éventuelles irrégularités de la surface du tube dues au fait que l'usinage a été fait section par section.

L'invention concerne également un mode de mise en oeuvre de ce procédé où l'on travaille par tronçons de tube au lieu de travailler par section. On appelle tronçon une longueur de tube correspondant à plusieurs fois la largeur de coupe de l'outil.

En effet, on a constaté que, dans les limites autorisées d'excentration, on peut encore simplifier le système de commande de l'outil et augmenter la productivité de l'appareil mettant en oeuvre le procédé si l'on asservit l'outil à une seule condition de position radiale pour un tronçon de tube, c'est-à-dire si l'on conserve la même position radiale d'outil pour plusieurs sections successives, à condition de choisir judicieusement cette position.

Dans cette variante, la demanderesse prévoit d'attribuer la même section (appelée section-guide) à toute la longueur du tronçon, longueur typiquement comprise entre 10 et 80 mm, pour la commande du banc d'usinage le long de ce tronçon.

Les caractéristiques de cette section-guide, qui sont utilisées par les organes du banc d'usinage, sont déduites des caractéristiques des sections successives du tronçon par application d'une ou plusieurs lois de correspondance, choisies de façon que la section-guide soit très voisine des sections successives. On détermine d'abord pour chacune des sections droites de contrôle successives la position des extrémités du diamètre de référence allant du point où l'épaisseur de paroi est minimale au point où l'épaisseur de paroi est maximale ainsi que les valeurs de ces épaisseurs de paroi maximale et minimale, et on utilise ces données pour en déduire les caractéristiques de la section-guide et pour régler l'usinage du tronçon, dont la longueur peut être choisie en fonction des tolérances d'excentration à satisfaire et de l'importance des variations d'excentration le long du tube avant usinage. Pour l'usinage du tronçon et de façon similaire à l'usinage par section précédemment décrit, l'outil d'usinage vient tourner autour d'un axe passant par le centre du contour intérieur de la section-guide et on le déplace jusqu'à obtenir théoriquement pour cette section-guide une épaisseur de paroi constante au plus égale à son épaisseur minimale.

A titre d'exemple, après avoir déterminé les caractéristiques des sections droites de contrôle successives du tronçon, on prend comme angle d'orientation du diamètre de référence de la section-guide la moyenne arithmétique des angles d'orientation des diamètres de référence de ces sections de contrôle successives du tronçon. On oriente le tube de façon que ce diamètre de référence de la section-guide soit parallèle à la direction de translation de l'ensemble (axe de rotation de l'outil-outil), et on met en contact avec le tube, dans une section constituant la section de réglage du tronçon et dans la direction précédente, deux palpeurs dont les points de contact définissent alors les deux extrémités du diamètre de référence de la section-guide du tronçon. Le centre du contour extérieur de la section-guide du tronçon est alors défini comme le milieu de ce diamètre de référence. Les épaisseurs maximale et minimale de la section-guide sont respectivement définies comme les moyennes arithmétiques des épaisseurs maximales et minimales des sections successives. Et le centre du contour intérieur de la section-guide est situé sur le diamètre de référence défini précédemment, à une distance du centre du contour extérieur égale à la demi-différence des épaisseurs maximale et minimale de la section-guide en direction de l'extrémité du diamètre de référence correspondant à l'épaisseur de tube la plus faible.

Les caractéristiques de la section-guide et la longueur du tronçon sont introduites dans l'organe de calcul du banc d'usinage. L'outil est mis en rotation, l'ensemble (axe-outil) est déplacé de façon que l'axe de rotation passe par le centre du contour intérieur de la section-guide, et l'outil est déplacé radialement jusqu'à sa position de coupe, de façon à obtenir pour la section-guide une épaisseur de paroi constante au plus égale à son épaisseur minimale. Ce réglage de l'outil reste le même tandis que le porte-outils est déplacé longitudinalement le long du tronçon dont le pourtour est ainsi usiné.

A la fin de l'usinage du premier tronçon, on éloigne l'outil, on déplace le porte-outils en face de la section de réglage du tronçon suivant et on répète les mêmes opérations que pour le tronçon précédent. Les caractéristiques de la section guide du tronçon suivant sont fournies au banc d'usinage, l'orientation du tube est modifiée en fonction de la direction du diamètre de référence de la nouvelle section-guide, le réglage et le déplacement de l'outil sont déterminés par les caractéristiques de cette section-guide et la longueur du tronçon.

L'invention concerne également un dispositif d'usinage utilisable pour la mise en oeuvre du procédé de l'invention. Ce dispositif comprend au moins une machine d'usinage qui comporte elle-même, comme le dispositif d'usinage de manetons de vilebrequins décrit par le deuxième document cité, un banc portant deux mandrins de maintien du produit à usiner coaxiaux et orientables, un chariot porté par le banc, sur lequel il peut se déplacer parallèlement à l'axe des mandrins, une tête d'usinage portée par le chariot sur lequel elle peut se déplacer perpendiculairement à l'axe des mandrins, une couronne porte-outils portée par la tête d'usinage, ladite couronne entourant le produit à usiner et tournant autour d'un axe parallèle à l'axe des mandrins, et un outil d'usinage porté par cette couronne.

Cette machine d'usinage d'un tube selon l'invention diffère du dispositif connu précédent, en ce que ledit produit à usiner est un tube, enceque ledit l'outil d'usinage est monté sur ladite couronne au moyen d'un dispositif de coulissement radial, et en ce que ladite tête d'usinage porte aussi un dispositif de repérage des points d'épaisseur de paroi respectivement minimale et maximale d'une section droite du tube, ces points constituant les extrémités du diamètre de référence d'une section à usiner, ledit dispositif de repérage comportant deux palpeurs diamètralement opposés situés dans un plan parallèle à la direction de déplacement de ladite tête et pouvant être mis en contact avec le tube en lesdits points de façon à déterminer la position dudit axe de rotation de ladite couronne porte-outils pour l'usinage de ladite section.

Une description plus complète du dispositif de l'invention est donnée dans l'exemple qui suit.

## EXEMPLE DE REALISATION

L'exemple qui suit décrit un dispositif permettant de mettre en oeuvre le procédé de l'invention.

Il se compose essentiellement d'un appareillage de contrôle à ultrasons, d'une machine d'usinage à commande numérique, d'un ensemble de transfert des tubes de l'appareillage de contrôle à la machine d'usinage, et d'un élément informatique de dialogue entre appareillage de contrôle et machine d'usinage permettant d'automatiser le cycle d'usinage.

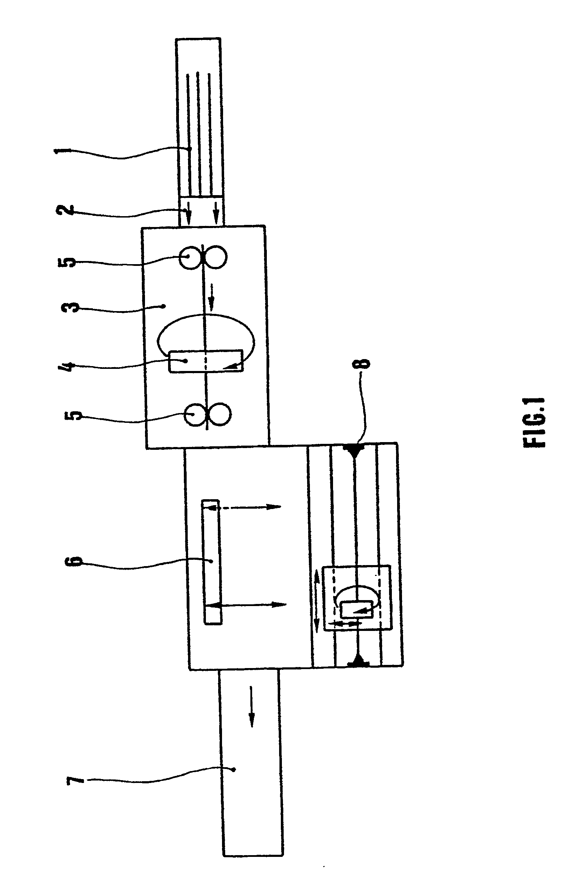

La figure 1 schématise ce dispositif.

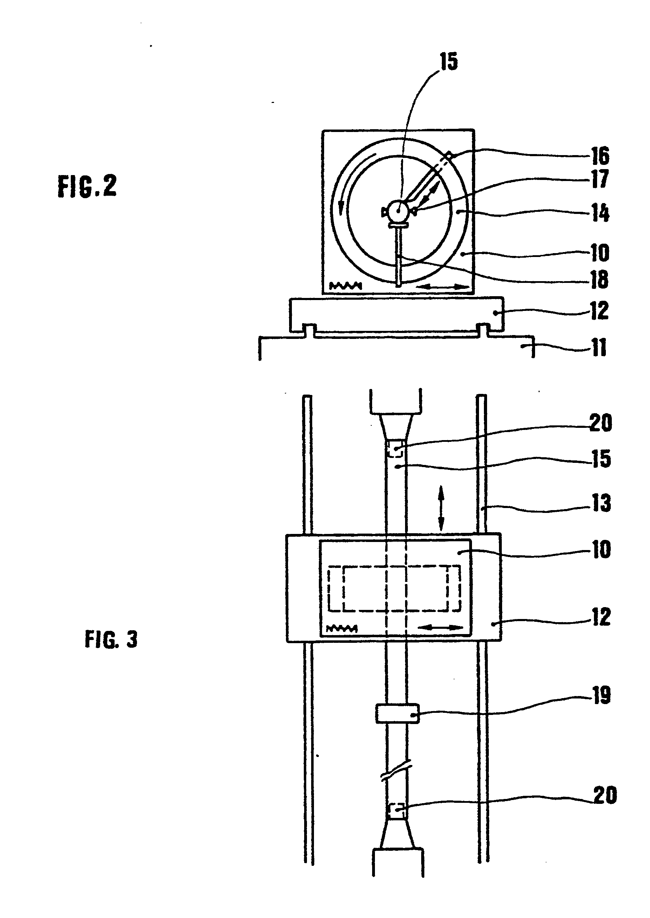

Les figures 2 et 3 représentent la machine d'usinage, vue respectivement en bout et en plan.

La machine ou appareillage de contrôle (3) comporte principalement une table de stockage amont (1), un mécanisme d'approvisionnement (2) du tube, un bâti qui reçoit la tête à ultrasons (4), son dispositif d'asservissement et le mécanisme d'entraînement du tube en translation qui est constitué par des galets (5) d'écartement réglable selon le diamètre du tube.

L'ensemble de transfert (6) comporte principalement un mécanisme de déplacement du tube qui maintient la position angulaire du tube (c'est-à-dire son orientation par rapport à son axe longitudinal) pendant son déplacement, des éléments de guidage, un portique de chargement sur la machine d'usinage qui maintient aussi la position angulaire du tube, et un dispositif d'asservissement. Lorsque le contrôle a montré qu'un tube n'a pas besoin d'usinage , le mécanisme de déplacement l'envoie directement dans la goulotte de déchargement (7) de la machine d'usinage sans qu'il suit pris par le portique de chargement de ladite machine. Le tube est amené, sans modification de sa position angulaire depuis sa sortie de la machine ou appareillage de contrôle (3), par le portique de transfert, sur le banc (11) de la machine d'usinage (8).

Cette machine d'usinage (8) est conçue pour des tubes de diamètre extérieur de 40 à 80 mm, de diamètre intérieur de l'ordre de 25 à 55 mm, de longueur de 2 à 6 mètres: Le tube (15) est pris entre deux mandrins expansibles (20) à commande hydraulique qui pénètrent dans ses extrémités, et qui peuvent tourner en synchronisme pour positionner angulairement le tube. Un des mandrins est fixe, pour référence axiale, l'autre est réglable sur une coulisse de positionnement longitudinal.

La tête d'usinage (10) est placée sur le chariot (12) qui peut se déplacer longitudinalement sur le banc (11), avec une course maximale de 6 mètres. Ce déplacement, commandé par un dispositif de précision à pignon et crémaillère (13), permet de positionner la tête d'usinage le long du tube (15) en face de la section à usiner. La tête d'usinage (10) peut coulisser transversalement sur le chariot (12). Elle porte la couronne porte-outils (14) entourant le tube (15) et tournant à 500 tours/minute. Ce montage permet la translation transversale de l'axe de rotation de l'outil pour régler sa position par rapport au tube et l'amener à passer par le centre du contour intérieur de la section à usiner.

L'outil (16) est monté sur la couronne (14) par l'intermédiaire d'un dispositif de coulissement radial, qui permet de régler la distance de l'arête de coupe à l'axe de rotation de la couronne, c'est-à-dire le rayon du cercle décrit par cette arête.

La tête d'usinage (10) porte aussi un dispositif de repérage des extrémités du diamètre de référence de la section considérée qui comporte deux palpeurs (17) diamètralement opposés situés dans un plan parallèle à la direction de déplacement transversal de la tête d'usinage. La tête d'usinage (10) porte enfin des butées (18) servant au maintien du positionnement précis en hauteur du tube (15) dans la zone de la section considérée pendant la phase de réglage. Le banc d'usinage (11) comporte aussi une lunette de maintien éclipsable (19) qui sert à supporter le tube pendant l'usinage. Elle est mise en place avant l'usinage de chaque section.

Le système informatique emmagasine les données dimensionnelles fournies par l'élément de contrôle, ainsi que la donnée fournie par le dispositif de repérage à 2 palpeurs, traite ces données et fournit toutes les informations qui en résultent au système de commande numérique de la machine d'usinage qui effectue les réglages préalables à chaque usinage.

A titre d'exemple, on charge sur la table de stockage de la machine de contrôle des tubes de 63,5 mm de diamètre extérieur et de 5 mètres de long. On fait examiner chaque tube successivement par la tête de contrôle à ultrasons à 4 traducteurs, tandis que le tube se déplace longitudinalement avec une vitesse de 4 mètres/minute. Les données ainsi recueillies sont, pour chaque section du tube, sa distance à l'extrémité d'origine, l'épaisseur minimale, l'épaisseur maximale, et l'angle du diamètre de référence de la section considérée avec le diamètre de référence de la section d'origine.

Si les excentrations de toutes les sections contrôlées sont inférieures à la tolérance choisie, le système "décide" qu'il n'y a pas lieu d'usiner le tube et l'envoie directement de l'appareillage de contrôle dans la goulotte de déchargement. Si tel n'est pas le cas, le tube est pris par le portique de transfert dans la position angulaire qu'il a sur l'appareillage de contrôle sans modification de cette position angulaire. Une extrémité est engagée sur le mandrin expansible fixe et le mandrin expansible mobile s'engage dans l'autre extrémité.

La tête d'usinage (10) se place au droit de la section à usiner. Par la rotation des mandrins, le tube est orienté de façon que le diamètre de référence se place en face des palpeurs, parallèlement à la direction de translation transversale de la tête d'usinage.

Les butées (18) de positionnement vertical du tube au nombre de 6 sont montées au contact du tube. La lunette de maintien (19) vient bloquer le tube dans sa position. Les butées (18) sont descendues pour permettre le passage de l'outil d'usinage (16). L'outil étant placé en position de retrait maximal, pour ne pas toucher le tube à ce stade, la couronne porte-outils (14) est mise en rotation et le restera jusqu'à la fin de l'usinage du tube. Le contact des palpeurs (17) avec les extrémités du diamètre de référence ayant permis la détermination du centre du contour extérieur, et cette donnée ayant été fournie au calculateur avec les éléments venant do la machine de contrôle, la tête d'usinage (10) est déplacée transversalement de façon que l'axe de rotation de la couronne porte-outils (14) passe par le centre du contour intérieur de la section dont la position a été déterminée par le calculateur.

Les palpeurs (17) s'éclipsent et l'arête de coupe de l'outil (16) est déplacée radialement de façon progressive. Cette arête arrive au contact du tube lorsqu'elle est à une distance de l'axe de rotation égale au rayon extérieur du tube correspondant au point d'épaisseur maximale. Elle commence à usiner le contour extérieur et son avance radiale est arrêtée quand elle est à une distance de l'axe de rotation égale au rayon extérieur du tube correspondant au point d'épaisseur minimale. L'usinage de la section considérée étant terminé, l'outil opère son retrait radial maximal, en attendant l'opération d'usinage suivante, et la lunette de maintien débloque le tube.

L'opération est répétée pour toutes les sections qui doivent être usinées.

Lorsqu'on travaille par tronçon, l'avance longitudinale du porte-outils est mise en marche lorsque l'outil commence l'usinage de la première section du tronçon et s'arrête lorsqu'il arrive à l'extrémité du tronçon, le réglage de la position de l'outil n'étant pas modifié sur toute la longueur du tronçon.

En fin d'usinage du tube, la lunette de maintien s'éclipse, le mandrin mobile s'écarte, la tête d'usinage se dégage, le mandrin fixe se desserre et le tube est évacué.

A titre indicatif, le temps qui s'écoule entre le début du chargement d'un tube de 5 mètres de long sur la machine de contrôle et son évacuation dans la goulotte après usinage est de l'ordre de 16,4 minutes pour un usinage à 100 % par tronçon de 50 mm. La machine peut traiter environ 3,5 tubes à l'heure dans le cas très défavorable où toutes les sections doivent être usinées. Le débit peut monter à 10 tubes à l'heure lorsque seulement le quart des sections excède la tolérance d'excentration et est donc à usiner.

Un des avantages de l'appareil est justement qu'il permet, grâce à l'établissement par la machine de contrôle de la carte du tube et grâce aux automatismes intégrés, de n'usiner que les sections qui en ont besoin et de sauter celles qui sont à l'intérieur de la tolérance d'excentricité. Ceci joint au principe d'obtention de dimensions minimales différentes d'une section à l'autre permet une économie de matière très importante.

Le procédé de l'invention s'applique typiquement à l'usinage de tubes extrudés et laminés en alliage de zirconium de diamètre extérieur 30 à 110 mm, de diamètre intérieur 15 à 75 mm et de longueur unitaire 1 à 8 mètres.

Ce procédé permet d'obtenir des pièces tubulaires ou tubes usinés d'excentricité relative en toute section particulièrement faible, ne dépassant pas 1% en pratique au lieu de 3 à 5 % environ obtenus de façon connue. Il en résulte pour les tubes à paroi mince obtenus par laminage de ces tubes une réduction semblable de l'excentricité entraînant, dans le cas typique des tubes de gainage de combustible, une amélioration de la qualité et de la sécurité en service, l'épaisseur minimale de ces tubes se trouvant augmentée pour une épaisseur moyenne donnée.

## Revendications

1. Procédé d'usinage d'un tube (15) dont les sections droites ont des contours intérieur et extérieur circulaires, dans lequel on effectue des mesures d'épaisseur du tube (15), et dans lequel on fait tourner un outil d'usinage (16) et on le déplace radialement en tenant compte desdites mesures d'épaisseur jusqu'à obtenir une épaisseur de paroi choisie, caractérisé en ce qu'il comprend les stades suivants :

a) On détermine pour une section droite dudit tube (15) d'une part la position des extrémités du diamètre de référence allant du point où l'épaisseur de paroi est minimale au point où l'épaisseur de paroi est maximale, d'autre part les valeurs de ces deux épaisseurs.

b) On détermine la position du centre du contour extérieur comme milieu du diamètre de référence.

c) On détermine la position du centre du contour intérieur comme distant du centre du contour extérieur d'une longueur égale à la demi-différence desdites épaisseurs maximale et minimale en direction du point d'épaisseur minimale.

d) Le tube étant fixe, on fait tourner ledit outil d'usinage (16) autour d'un axe passant par le centre du contour intérieur de ladite section droite.

e) On effectue ledit déplacement radial dudit outil (16) en direction dudit axe de rotation, l'épaisseur de paroi constante dudit tube (15) obtenue étant au plus égale à ladite épaisseur minimale initiale de ladite section droite.

f) On éloigne l'outil (16), on déplace le porte-outils en face de la section suivante et on répète les opérations précédentes sur les sections successives désirées du tube (15).

2. Procédé selon la revendication 1, où l'on oriente le tube autour de son axe longitudinal avant l'usinage de chaque section de façon que l'axe de référence de la section soit parallèle à la direction de déplacement transversal de l'ensemble (axe-outil).

3. Procédé selon la revendication 1, où on détermine la position et l'épaisseur du tube en continu au moyen d'un dispositif à ultra-sons.

4. Procédé selon la revendication 3, où on détermine les épaisseurs minimale et maximale ainsi que la position des cercles intérieur et extérieur des sections successives au moyen dudit dispositif à ultra-sons.

5. Procédé selon la revendication 2, où, après orientation du tube, on amène au contact du tube deux palpeurs pour déterminer les extrémités du diamètre de référence de chaque section.

6. Procédé selon l'une quelconque des revendications 1 à 5, où les caractéristiques dimensionnelles de chaque section sont fournies à l'organe de calcul d'une machine d'usinage à commande numérique qui effectue les réglages préalables à chaque usinage.

7. Procédé d'usinage selon la revendication 1, modifié en ce que on conserve le même réglage de l'outil de coupe (16) pour l'usinage d'un tronçon dudit tube (15) ayant une longueur égale à plusieurs fois la largeur de coupe de cet outil (16), comprenant les étapes suivantes :

on exécute d'abord les déterminations (a) des caractéristiques de chacune des sections droites de contrôle successives du tronçon, puis, en remplacement des stades (b) et (c), on attribue audit tronçon une section-guide de référence voisine desdites sections droites du tronçon, les caractéristiques de cette section-guide étant déduites desdites caractéristiques desdites sections droites, puis en remplacement des stades (d) et (e) on fait tourner l'outil d'usinage (16) autour d'un axe passant par le centre du contour intérieur de ladite section-guide et on le déplace jusqu'à obtenir pour la section-guide une épaisseur de paroi constante au plus égale à son épaisseur minimale.

8. Procédé d'usinage d'une pièce tubulaire selon la revendication 7, comprenant les stades suivants :

a1) On détermine pour chacune des sections droites de contrôle successives d'un tronçon la position des extrémités du diamètre de référence allant du point où l'épaisseur de paroi est minimale au point où l'épaisseur de paroi est maximale ainsi que les valeurs de ces épaisseurs de paroi maximale et minimale.

b1) On prend comme angle d'orientation du diamètre de référence de la section-guide du tronçon la moyenne arithmétique des angles d'orientation des diamètres de référence des sections droites de contrôle successives.

c1) On oriente le tube de façon que ledit diamètre de référence de la section-guide soit parallèle à la direction de translation de l'ensemble (axe-outil).

d1) On met en contact avec le tube deux palpeurs dont les points de contact définissent les extrémités du diamètre de référence de la section-guide, et on détermine la position du centre du contour extérieur de la section-guide comme milieu de ce diamètre de référence.

e1) On définit les épaisseurs maximale et minimale de la section-guide respectivement comme les moyennes arithmétiques des épaisseurs maximales. et des épaisseurs minimales des sections de contrôle successives du tronçon.

f1) On détermine la position du centre du contour intérieur de la section-guide comme étant situé sur le diamètre de référence de cette section-guide, à une distance du centre du contour extérieur égale à la demi-différence des épaisseurs maximale et minimale de la section-guide en direction de l'extrémité du diamètre de référence correspondant à l'épaisseur de tube la plus faible.

g1) Le tube étant fixe, on fait tourner l'outil d'usinage et on déplace l'ensemble axe-outil de façon que l'axe de rotation passe par le centre du contour intérieur de la section-guide.

h1) On déplace radialement l'outil jusqu'à sa position de coupe jusqu'à obtenir pour la section-guide une épaisseur de paroi constante au plus égale à son épaisseur minimale.

i1) On conserve ce réglage radial de l'outil et on déplace l'outil longitudinalementle long du tronçon pour l'usiner.

j1) On éloigne l'outil, on déplace le porte-outils et on répète les opérations précédentes pour usiner le tronçon suivant.

9. Procédé d'usinage selon la revendication 7 comprenant les stades suivants :

a2) on détermine pour chacune des sections droites de contrôle successives d'un tronçon la position des extrémités du diamètre de référence allant du point où l'épaisseur de paroi est minimale au point où l'épaisseur de paroi est maximale ainsi que les valeurs de ces épaisseurs de paroi maximale et minimale.

b2) on prend comme angle d'orientation du diamètre de référence de la section-guide du tronçon la moyenne arithmétique des angles d'orientation des diamètres de référence des sections droites de contrôle successives.

c2) on oriente le tube de façon que ledit diamètre de référence de la section-guide soit parallèle à la direction de translation de l'ensemble (axe-outil).

d2) on met en contact avec le tube deux palpeurs dont les points de contact définissent les extrémités du diamètre de référence de la section-guide, et on détermine la position du centre du contour extérieur de la section-guide comme milieu de ce diamètre de référence.

e2) on définit les épaisseurs maximale et minimale de la section-guide respectivement comme les moyennes arithmétiques des épaisseurs maximales et des épaisseurs minimales des sections de contrôle successives du tronçon.

f2) on calcule la différence entre lesdites épaisseurs maximale et minimale de la section-guide dudit tronçon, et on compare cette différence avec une tolérance d'excentricité prédéterminée.

10. Procédé d'usinage selon la revendication 9, dans lequel :

- lorsque ladite différence des épaisseurs maximale et minimale de la section-guide est inférieure ou égale à ladite tolérance d'excentricité, on n'usine pas ledit tronçon ;
- lorsque ladite différence est supérieure à ladite tolérance d'excentricité, on continue selon les stades suivants :

g2) on détermine la position du centre du contour intérieur de la section-guide comme étant situé sur le diamètre de référence de cette section-guide, à une distance du centre du contour extérieur égale à la demi-différence des épaisseurs maximale et minimale de la section-guide en direction de l'extrémité du diamètre de référence correspondant à l'épaisseur de tube la plus faible.

h2) le tube étant fixe, on fait tourner l'outil d'usinage et on déplace l'ensemble axe-outil de façon que l'axe de rotation passe par le centre du contour intérieur de la section-guide.

i2) on déplace radialement l'outil jusqu'à sa position de coupe jusqu'à obtenir pour la section-guide une épaisseur de paroi constante au plus égale à son épaisseur minimale.

j2) on conserve ce réglage radial de l'outil et on déplace l'outil longitudinalement le long du tronçon pour l'usiner.

k2) on éloigne l'outil.

11. Dispositif d'usinage, utilisable pour la mise en oeuvre du procédé de l'une quelconque des revendications 1 à 10, comprenant au moins une machine d'usinage (8) comportant :

a) un banc (11) portant deux mandrins de maintien du produit à usiner (15) coaxiaux et orientables (20).

b) un chariot (12) porté par le banc (11), sur lequel il peut se déplacer parallèlement à l'axe des mandrins (20).

c) une tête d'usinage (10) portée par le chariot (12) sur lequel elle peut se déplacer perpendiculairement à l'axe des mandrins (20).

d) une couronne porte-outils (14) portée sur la tête d'usinage (10), ladite couronne (14) entourant le produit à usiner (15) et tournant autour d'un axe parallèle à l'axe des mandrins (20).

e) un outil d'usinage (16) porté par la couronne (14)

caractérisé en ce que ledit produit à usiner est un tube (15), en ce que ledit outil d'usinage (16) est monté sur ladite couronne (14) au moyen d'un dispositif de coulissement radial, et en ce que ladite tête d'usinage (10) porte aussi un dispositif de repérage des points d'épaisseur de paroi respectivement minimale et maximale d'une section droite du tube, ces points constituant les extrémités du diamètre de référence d'une section à usiner, ledit dispositif de repérage comportant deux palpeurs (17) diamétralement opposés situés dans un plan parallèle à la direction de déplacement de ladite tête (10) et pouvant être mis en contact avec le tube en lesdits points de façon à déterminer la position dudit axe de rotation de ladite couronne porte-outils (20) pour l'usinage de ladite section.

12. Dispositif d'usinage d'un tube (15) selon la revendication 11, dont la machine d'usinage (8) comporte aussi une butée (18) de positionnement vertical du tube (15) portée par la tête d'usinage (10) et des lunettes de maintien éclipsables (19) portées par le banc (11).

13. Dispositif d'usinage d'un tube (15) selon l'une des revendications 11 ou 12, comportant en outre :

- un appareillage de contrôle à ultrasons (3,4), permettant de repérer le diamètre de référence, ainsi que les épaisseurs minimale et maximale de chaque section transversale du tube (15).
- un dispositif de transfert (6) du tube (15) depuis l'appareillage de contrôle (3) jusqu'à la machine d'usinage (8), conservant l'orientation du tube (15) autour de son axe.

14. Dispositif d'usinage d'un tube (15) selon la revendication 13, comportant un élément de dialogue qui emmagasine et traite les données dimensionnelles et géométriques fournies par l'appareillage de contrôle (3) et par le dispositif de repérage pour chaque section du tube (15), et une machine d'usinage de commande numérique, ledit système recevant et exploitant les informations élaborées par l'élément de dialogue.

**Claims**

1. A process for machining a tube (15) whose cross sections have circular internal and external contours, wherein measurements are made in respect of the thickness of the tube (15), and wherein a machining tool (16) is rotated and displaced radially while taking account of said thickness measurements until a selected wall thickness is obtained, characterised in that it comprises the following steps:

a) For a cross section of said tube (15) determining on the one hand the position of the ends of the reference diameter going from the point at which the wall thickness is at a minimum to the point at which the wall thickness is at a maximum, and on the other hand the values of these two thicknesses,

b) Determining the position of the centre of the external contour as the middle of the reference diameter,

c) Determining the position of the internal contour as being spaced from the centre of the external contour a distance equal to half the difference between said maximum and minimum thicknesses in the direction of the point of minimum thickness,

d) The tube being fixed, rotating said machining tool (16) around an axis passing through the centre of the internal contour of said cross section,

e) Effecting said radial displacement of said tool (16) in the direction of said axis of rotation, the constant wall thickness of said tube (15) which is obtained being at most equal to said initial minimum thickness of said cross section, and

f) Removing the tool (16), displacing the tool carrier in front of the following section and repeating the preceding operations on the successive desired sections of the tube (15).

2. A process according to claim 1 wherein the tube is oriented about its longitudinal axis before the operation of machining each section in such a way that the reference axis of the section is parallel to the direction of transverse displacement of the (axis-tool) assembly.

3. A process according to claim 1 wherein the position and the thickness of the tube are continuously determined by means of an ultrasonic apparatus.

4. A process according to claim 3 wherein the minimum and maximum thicknesses and the position of the internal and external circles of the successive sections are determined by means of said ultrasonic apparatus.

5. A process according to claim 2 wherein after orientation of the tube two sensors are brought into contact with the tube to determine the ends of the reference diameter of each section.

6. A process according to any one of claims 1 to 5 wherein the dimensional characteristics of each section are supplied to the computing means of a numerically controlled machine tool which carries out the settings prior to each machining operation.

7. A machining process according to claim 1 which is modified in that the same setting of the cutting tool (16) is retained for machining a portion of said tube (15) which is of a length equal to several times the cutting width of said tool (16), comprising the following steps:

first carrying out the operations (a) of determining the characteristics of each of the successive control cross sections of the portion, then, replacing steps (b) and (c), attributing to said portion a reference guide section which is close to said cross sections of the portion, the characteristics of said guide section being deduced from said characteristics of said cross sections, then, replacing steps (d) and (e), rotating the machining tool (16) about an axis passing through the centre of the internal contour of said guide section and displacing it until the guide section is of a constant wall thickness which is at most equal to its minimum thickness.

8. A process for machining a tubular part according to claim 7 comprising the following steps:

a1) Determining for each of the successive control cross sections of a portion the position of the ends of the reference diameter going from the point at which the wall thickness is at a minimum to the point at which the wall thickness is at a maximum, and the values of said maximum and minimum wall thicknesses,

b1) Taking as the angle of orientation of the reference diameter of the guide section of the portion the arithmetic mean of the angles of orientation of the reference diameters of the successive control cross sections,

c1) Orienting the tube in such a way that said reference diameter of the guide section is parallel to the direction of translatory movement of the (axis-tool) assembly,

d1) Bringing into contact with the tube two sensors whose points of contact define the ends of the reference diameter of the guide section and determining the position of the centre of the external contour of the guide section as the middle of the reference diameter,

e1) Defining the maximum and minimum thicknesses of the guide section respectively as the arithmetic means of the maximum thicknesses and the minimum thicknesses of the successive control sections of the portion,

f1) Determining the position of the centre of the internal contour of the guide section as being located on the reference diameter of said guide section, at a distance from the centre of the external contour that is equal to half the difference between the maximum and minimum thicknesses of the guide section in the direction of the end of the reference diameter corresponding to the smallest tube thickness,

g1) The tube being fixed, rotating the machining tool and displacing the axis-tool assembly in such a way that the axis of rotation passes through the centre of the internal contour of the guide section,

h1) Radially displacing the tool to its cutting position until there is obtained for the guide section a constant wall thickness which is at most equal to its minimum thickness,

i1) Maintaining the radial setting of the tool and displacing the tool longitudinally along the portion for machining same, and

j1) Removing the tool, displacing the tool carrier and repeating the preceding operations for machining the following portion.

9. A machining process according to claim 7 comprising the following steps:

a2) Determining for each of the successive control cross sections of a portion the position of the ends of the reference diameter going from the point at which the wall thickness is at a minimum to the point at which the wall thickness is at a maximum, and the values of said maximum and minimum wall thicknesses,

b2) Taking as the angle of orientation of the reference diameter of the guide section of the portion the arithmetic mean of the angles of orientation of the reference diameters of the successive control cross sections,

c2) Orienting the tube in such a way that said reference diameter of the guide section is parallel to the direction of translatory movement of the (axis-tool) assembly,

d2) Bringing into contact with the tube two sensors whose points of contact define the ends of the reference diameter of the guide section, and determining the position of the centre of the external contour of the guide section as the middle of said reference diameter,

e2) Defining the maximum and minimum thicknesses of the guide section respectively as the arithmetic means of the maximum thicknesses and the minimum thicknesses of the successive control sections of the portion, and

f2) Computing the difference beteeen said maximum and minimum thicknesses of the guide section of the portion, and comparing said difference to a predetermined eccentricity tolerance.

10. A machining process according to claim 9 wherein:

- when said difference between the maximum and minimum thicknesses of the guide section is less than or equal to said eccentricity tolerance, said portion is not machined;
- when said difference is greater than said eccentricity tolerance, the procedure continues in accordance with the following steps:

g2) determining the position of the centre of the internal contour of the guide section as being located on the reference diameter of said guide section, at a distance from the centre of the external contour that is equal to half the distance between the maximum and minimum thicknesses of the guide section in the direction of the end of the reference diameter corresponding to the smallest tube thickness,

h2) the tube being fixed, rotating the machining tool and displacing the axis-tool assembly in such a way that the axis of rotation passes through the centre of the internal contour of the guide section,

i2) radially displacing the tool to its cutting position until there is obtained for the guide section a constant wall thickness which is at most equal to its minimum thickness,

j2) maintaining that radial setting of the tool and displacing the tool longitudinally along the portion for machining same, and

k2) removing the tool.

11. A machining apparatus which can be used for carrying out the process according to any one of claims 1 to 10 including at least one machine tool (8) comprising:

a) a bench (11) carrying on two orientable coaxial mandrels (20) for holding the product to be machined (15),

b) a carriage (12) carried by the bench (11), on which it can be displaced in parallel relationship to the axis of the mandrels (20),

c) a machining head (10) carried by the carriage (12) on which it can be displaced perpendicularly to the axis of the mandrels (20),

d) a tool carrier ring (14) carried by the machining head (10), said ring (14) surrounding the product (15) to be machined and rotating about an axis parallel to the axis of the mandrels (20), and

e) a machining tool (16) carried by the ring (14),

characterised in that said product to be machined is a tube (15), that said machining tool (16) is mounted on said ring (14) by means of a radial sliding means, and that said machining head (10) also carries a means for marking the points of minimum and maximum wall thickness respectively of a cross section of the tube, said points constituting the ends of the reference diameter of a section to be machined, said marking means comprising two sensors (17) which are diametrally opposite and which are disposed in a plane parallel to the direction of displacement of said head (10) and which are capable of being brought into contact with the tube at said points in such a way as to determine the position of said axis of rotation of said tool carrier ring (20) for machining of said section.

12. Apparatus for machining a tube (15) according to claim 11 wherein the machine tool (8) also comprises an abutment (18) for vertical positioning of the tube (15), the abutment being carried by the machining head (10) and removable holder ring members (19) carried by the bench (11).

13. An apparatus for machining a tube (15) according to one of claims 11 and 12 and further comprising:

- an ultrasonic checking apparatus (3, 4) for marking the reference diameter and the minimum and maximum thicknesses of each transverse section of the tube (15), and

- an apparatus (6) for transferring the tube (15) from the checking apparatus (3) to the machine tool (8), while retaining the orientation of the tube (15) about its axis.

14. An apparatus for machining a tube (15) according to claim 13 comprising a dialogue element which stores and processes the dimensional and geometrical data supplied by the checking apparatus (3) and by the marking apparatus for each section of the tube (15), and a numerically controlled machine tool, said system receiving and operating on the data produced by the dialogue element.

## Patentansprüche

1. Verfahren zum spanenden Bearbeiten eines Rohres (15), dessen Querschnitte innere und äußere kreisförmige Konturen aufweisen, bei dem Dickenmessungen des Rohres (15) durchgeführt werden, und bei dem ein Bearbeitungswerkzeug (16) gedreht wird und radial bewegt wird unter Beachtung der Dickenmessungen, bis zum Erhalt einer vorgewählten Seitenwanddicke, **dadurch gekennzeichnet,** daß es die folgenden Schritte aufweist:

    a) Bestimmen für einen Querschnitt des Rohres (15) einerseits der Stellung der Enden des Referenzdurchmessers ausgehend vom Punkt, wo die Dicke der Seitenwand minimal ist zum Punkt, wo die Dicke der Seitenwand maximal ist, und andererseits der Werte dieser beiden Dicken,

    b) Bestimmen der Position des Zentrums der Außenkontur als Mitte des Referenzdurchmessers,

    c) Bestimmen der Position des Zentrums der Innenkontur als Abstand vom Zentrum der Außenkontur einer Länge gleich der Halbdifferenz der maximalen und minimalen Dicken in Richtung auf den minimalen Dickenpunkt,

    d) bei befestigtem Rohr, Drehen des Bearbeitungswerkzeugs (16) um eine Achse, die durch das Zentrum der Innenkontur des geraden Querschnitts hindurchgeht,

    e) Ausführen der radialen Bewegung des Werkzeugs (16) in Richtung der Drehachse, wobei die erhaltene konstante Seitenwanddicke des Rohres (15) höchstens gleich der anfänglichen minimalen Dicke des Querschnitts ist,

    f) Wegführen des Werkzeugs (16), Bewegen des Werkzeugträgers gegenüber dem nachfolgenden Abschnitt und Wiederholen der vorhergehenden Arbeitsgänge auf die nachfolgenden gewünschten Abschnitte des Rohres (15).

2. Verfahren nach Anspruch 1, wo das Rohr um seine Längsachse ausgerichtet wird, vor der Bearbeitung eines jeden Abschnitts derart, daß seine Referenzachse des Abschnitts parallel ist zur Richtung der Querbewegung der Achse und Werkzeug Anordnung.

3. Verfahren nach Anspruch 1, bei das die Stellung und die Dicke des Rohres kontinuierlich mittels einer Ultraschallvorrichtung bestimmt wird.

4. Verfahren nach Anspruch 3, bei dem die Minimal- und Maximaldicken sowie die Stellung des Innen- und Außenkreises der aufeinanderfolgenden Abschnitte mittels der Ultraschallvorrichtung bestimmt werden.

5. Verfahren nach Anspruch 2, bei dem nach Ausrichten des Rohres zwei Fühler bzw. Sensoren in Berührung mit dem Rohr gebracht werden, um die Enden des Referenzdurchmessers eines jeden Abschnitts zu bestimmen.

6. Verfahren nach einem der Ansprüche 1 bis 5, bei dem die Abmessungswerte eines jeden Abschnitts einem Rechenorgan einer numerischen gesteuerten Bearbeitungsmaschine zugeführt werden, die die Einstellungen vor jeder Bearbeitung durchführt.

7. Bearbeitungsverfahren nach Anspruch 1, dadurch geändert, daß dieselben Einstellungen des Schneidwerkzeugs (16) für die Arbeit eines Rohrstumpfes des Rohres (15) gespeichert wird, das eine Länge aufweist, die gleich einem Vielfachen der Schneidbreite des Werkzeuges (16) ist, welche die folgenden Schritte aufweist:

    zunächst Ausführen der Bestimmung (a) der Eigenschaften eines jeden der aufeinanderfolgenden Kontrollquerschnitte des Teils, sodann unter Austauschen der Stadien (b) und (c), Beifügen zu dem Teil einen Referenzführungsabschnitt in der Nähe der genannten Querschnitte des Teils, wobei die Eigenschaften dieses Führungsabschnitts von den genannten Eigenschaften der Querschnitte abgeleitet werden, sodann unter Austauschen der Stadien (d) und (e), Drehen des Bearbeitungswerkzeug (16) um eine Achse, die durch das Zentrum der Innenkontur des Führungsabschnitts geht, und Bewegen, bis für den Führungsabschnitt einer konstante Seitenwanddicke erreicht wird, die höchstens gleich seiner minimalen Dicke entspricht.

8. Bearbeitungsverfahren eines rohrförmigen Teils nach Anspruch 7, mit den folgenden Schritten:

    a1) Bestimmen für einen jeden der aufeinanderfolgenden Kontrollquerschnitte eines Stückes oder Teils, die Position der Enden des Referenzdurchmessers ausgehend von einem Punkt, wo die Dicke der Seitenwand minimal ist, zu einem Punkt, wo die Dicke der Seitenwand maximal ist, sowie der Wert dieser maximalen und minimalen Seitenwanddicken,

b1) Auswählen als Ausrichtungswinkel des Referenzdurchmessers des Führungsabschnitts des Stückes des arithmetischen Durchschnitts der Ausrichtungswinkel der Referenzdurchmesser der aufeinanderfolgenden Kontrollquerschnitte,

c1) Ausrichten des Rohres derart, daß der Referenzdurchmesser des Führungsabschnitts parallel ist zur Verschiebungsrichtung der Achse und Werkzeug Anordnung,

d1) Inberührungbringen mit dem Rohr von zwei Fühlern, deren Berührungspunkte die Enden des Referenzdurchmessers des Führungsabschnitts definieren, und Bestimmen der Position des Zentrums der Außenkontur des Führungsabschnitts als Mitte des Referenzdurchmessers,

e1) Definieren der maximalen und minimalen Dicke des Führungsabschnitts, jeweils als arithmetische Mittelwerte der maximalen Dicken und minimalen Dicken der aufeinanderfolgenden Kontrollabschnitte des Teils,

f1) Bestimmen der Position des Zentrums der Innenkontur des Führungsabschnitts, wie er auf dem Referenzdurchmesser dieses Führungsabschnitts vorhanden ist, mit einem Abstand vom Zentrum der Außenkontur gleich der halben Differenz der maximalen und minimalen Dicken des Führungsabschnitts in Richtung des Endes des Referenzdurchmessers entsprechend der geringsten Rohrdicke,

g1) wobei beim festen Rohr das Bearbeitungswerkstück gedreht wird und die Anordnung Werkzeugachse derart bewegt wird, daß die Drehachse durch das Zentrum der Innenkontur des Führungsabschnitts verläuft,

h1) radiales Bewegen des Werkzeugs bis zu seiner Schnittstellung bis zum Erreichen bei dem Führungsabschnitt einer konstanten Seitenwanddicke, die höchstens gleich seiner minimalen Seitenwanddicke ist,

i1) Beibehalten dieser radialen Einstellung des Werkzeugs und Bewegen des Werkzeugs in Längsrichtung entlang des Stückes, um es zu bearbeiten,

j1) Entfernen des Werkzeugs, Bewegen des Werkzeugträgers und Wiederholen der vorhergehenden Vorgänge, um das nächste Stück bzw. Teil zu bearbeiten.

9. Bearbeitungsverfahren nach Anspruch 7, mit den folgenden Schritten:

a2) Bestimmen für einen jeden der aufeinanderfolgenden geraden Kontrollquerschnitte eines Werkstückes der Stellung der Enden des Referenzdurchmessers ausgehend vom Punkt, wo die Dicke der Seitenwand minimal ist zum Punkt, wo die Dicke der Seitenwand maximal ist, sowie der Werte dieser maximalen und minimalen Seitenwanddicken,

b2) Annehmen als Ausrichtwinkel des Referenzdurchmessers des Führungsabschnitts des Teils oder Stücks den arithmetischen Mittelwert der Ausrichtwinkel der Referenzdurchmesser der aufeinanderfolgenden Kontrollquerschnitte,

c2) Ausrichten des Rohres derart, daß der genannte Referenzdurchmesser des Führungsabschnitts parallel ist zur Bewegungsrichtung der Achse und Werkzeug Anordnung.

d2) Inkontaktbringen mit dem Rohr von zwei Fühlern, deren Berührungspunkte die Enden des Referenzdurchmessers des Führungsabschnitts definieren, und Bestimmen der Position des Zentrums der Außenkontur des Führungsabschnitts als Mitte des Referenzdurchmessers,

e2) Definieren der maximalen und minimalen Dicken des Führungsabschnitts jeweils als die arithmetischen Mittelwerte der maximalen Dicken und minimalen Dicken der aufeinanderfolgenden Kontrollabschnitte des Werkstücks,

f2) Berechnen des Unterschieds zwischen den genannten maximalen und minimalen Dicken des Führungsabschnitts des Werkstücks, und Vergleichen dieses Unterschieds mit einer vorbestimmten Exzentrizitätstoleranz.

10. Bearbeitungsverfahren nach Anspruch 9, bei dem: wenn der Unterschied der maximalen und minimalen Dicken des Führungsabschnitts geringer oder gleich ist zur Exzentrizitätstoleranz, das Werkstück nicht bearbeitet wird;

wenn die genannte Differenz größer ist als die Exzentrizitätstoleranz mit den folgenden Verfahrensschritten fortgefahren wird:

g2) Bestimmen der Position des Zentrums der Innenkontur des Führungsabschnitts, wie er auf dem Referenzdurchmesser dieses Führungsabschnitts angeordnet ist, mit einem Abstand vom Zentrum der Außenkontur gleich der halben Differenz der maximalen und minimalen Dicken des Führungsabschnitts in Richtung auf das Ende des Referenzdurchmessers, das der geringsten Dik-

ke des Rohres entspricht,

h2) bei festgelegtem Rohr, Drehen des Bearbeitungswerkzeugs und Bewegen der Anordnung Werkzeugachse derart, daß die Drehachse durch das Zentrum der Innenkontur des Führungsabschnitts hindurchgeht,

i2) radiales Bewegen des Werkzeugs bis zur Schnittstellung, bis zum Erhalt für den Führungsabschnitt einer konstanten Seitenwanddicke, die höchstens gleich dieser minimalen Dicke ist,

j2) Beibehalten dieser radialen Regelung des Werkzeugs und Bewegen des Werkzeugs längs entlang des Werkstücks, um es zu bearbeiten,

k2) Entfernen des Werkzeugs.

11. Bearbeitungsvorrichtung, verwendbar für die Durchführens des Verfahrens nach einem der Ansprüche 1 bis 10, mit wenigstens einer Bearbeitungsmaschine (8), die aufweist:

a) ein Futter (11), das zwei Haltedornen das zu bearbeitende Erzeugnis (15) koaxial und ausrichtbar (20) trägt,

b) einen Schlitten (12), der von dem Futter (11) getragen wird, auf dem er sich parallel zur Achse der Dorne (20) bewegen kann,

c) einen Bearbeitungskopf (10), der von dem Schlitten (12) getragen wird, auf dem er sich senkrecht zur Achse der Dorne (20) bewegen kann,

d) einen Werkzeugträgerkranz (14), der auf dem Bearbeitungskopf (10) getragen wird, wobei der Kranz (14) das zu bearbeitende Produkt (15) umgibt und sich um eine Achse parallel zur Achse der Dorne (20) dreht,

e) ein Bearbeitungswerkzeug (16), das von dem Kranz (14) getragen wird,

**dadurch gekennzeichnet,** daß das zu bearbeitende Produkt ein Rohr (15) ist, daß das Bearbeitungswerkzeug (16) auf dem Kranz (14) mittels einer radialen Gleitvorrichtung angebracht ist, und daß der Bearbeitungskopf (10) ebenfalls eine Vorrichtung zum Aufspüren der minimalen bzw. maximalen Seitenwanddickenpunkte eines Querschnitts des Rohres trägt, wobei diese Punkte die Enden des Referenzdurchmessers eines zu bearbeitenden Abschnitts bilden, die Aufspürvorrichtung zwei Fühler (17) aufweist, die diametral gegenüberliegend angeordnet sind in einer Ebene parallel zur Bewegungsrichtung des Kopfes (10) und in Berührung gebracht werden können mit dem Rohr in den Punkten derart, daß sie die Stellung der Drehachse des Werkzeugträgerkranzes (20) für die Bearbeitung des Abschnitts bestimmen.

12. Bearbeitungsvorrichtung eines Rohres (15) nach Anspruch 11, dessen Bearbeitungsmaschine (8) ebenfalls einen vertikalen Positionieranschlag (18) des Rohres (15) aufweist, der von dem Bearbeitungskopf (10) getragen wird und einrastbare Gegenhalter (19) aufweist, die von dem Futter (11) getragen werden.

13. Bearbeitungsvorrichtung eines Rohres (15) nach einem der Ansprüche 11 oder 12, die weiterhin aufweist:

ein Ultraschallsteuergerät (3, 4), das erlaubt, den Referenzdurchmesser zu erfassen, sowie die minimalen und maximalen Dicken eines jeden Querschnitts des Rohres (15)

eine Übertragungsvorrichtung (6) des Rohres (15) von dem Steuergerät (3) bis zur Bearbeitungsmaschine (8), welche die Ausrichtung des Rohres (15) um seine Achse beibehält.

14. Bearbeitungsvorrichtung eines Rohres (15) nach Anspruch 13, mit einem interaktiven Element, das die Abmessungs- und geometrischen Daten aufnimmt und verarbeitet, die von dem Steuergerät (3) und von der Aufspürvorrichtung für jeden Querschnitt des Rohres (15) geliefert werden, und einer numerisch gesteuerten Bearbeitungsmaschine, wobei das System die von dem interaktiven Element bearbeiteten Daten aufnimmt und auswertet.

FIG.1

EP 0 211 782 B1

**FIG.2**

**FIG. 3**